# EUROPÄISCHE PATENTANMELDUNG

(11) **EP 4 624 861 A1**
(43) Veröffentlichungstag der Anmeldung: **01.10.2025**
(21) Anmeldenummer: 24218551.0
(22) Anmeldetag: 10.12.2024
(51) Int. Cl.: F41H 11/02, B64G 1/64, F42B 12/12, F42B 12/10, F42B 12/20

(54) **VORRICHTUNG ZUM ENTGEGENWIRKEN GEGEN EIN ZIELOBJEKT IM WELTRAUM, SYSTEM UND VERWENDUNG DER VORRICHTUNG**

(30) Priorität: 27.03.2024 DE 102024000992
(71) Anmelder: MBDA Deutschland GmbH, 86529 Schrobenhausen (DE)
(72) Erfinder: NEBEL, Florian, 85298 Scheyern (DE)
(74) Vertreter: Isarpatent

(57) **Zusammenfassung**

Die vorliegende Erfindung betrifft Vorrichtung (100) zum Entgegenwirken gegen ein Zielobjekt (500) im Weltraum, aufweisend wenigstens einen Raumflugkörper (110), der dazu eingerichtet ist, sich basierend auf Zieldaten dem Zielobjekt (500) anzunähern, und einen Effektor (120), der an einer Spitze des Raumflugkörpers (110) anordbar oder angeordnet ist, eine Schutzstruktur (121) aufweist, die in wenigstens eine von der Spitze abgewandte Richtung wirksam ist und wenigstens eine an oder in der Schutzstruktur (121) angeordnete Sprengladung (122) aufweist. Zudem betrifft die Erfindung die Verwendung einer solchen Vorrichtung (100) und ein System mit einer solchen Vorrichtung (100).

## Beschreibung

### TECHNISCHES GEBIET DER ERFINDUNG

Die vorliegende Erfindung betrifft eine Vorrichtung zum Entgegenwirken gegen ein Zielobjekt im Weltraum. Zudem betrifft die vorliegende Erfindung ein System zum Entgegenwirken gegen ein Zielobjekt im Weltraum. Des Weiteren betrifft die Erfindung die Verwendung der Vorrichtung zum Entgegenwirken gegen ein Zielobjekt im Weltraum und/oder Unschädlichmachen eines Zielobjekts im Weltraum.

### HINTERGRUND DER ERFINDUNG

Weltrauminfrastruktur, die beispielsweise zur Satellitenkommunikation und - navigation, zur Erdbeobachtung, oder dergleichen dienen kann, wird mittlerweile umfangreich von technischen Systemen genutzt und kann demensprechend als kritische, d.h. besonders bedeutende bzw. schützenswerte, Infrastruktur erachtet werden. Die Weltrauminfrastruktur, wie etwa Satelliten, Raumstationen oder dergleichen, kann jedoch Bedrohungen ausgesetzt sein. Neben herumfliegenden Weltraumschrott kann eine solche Bedrohung auch durch militärische Mittel oder andere Störer gegeben sein. Es besteht daher der Wunsch nach einer Möglichkeit, Bedrohungen für die Weltrauminfrastruktur zumindest zu verringern.

### ZUSAMMENFASSUNG DER ERFINDUNG

Aufgabe der Erfindung ist es, mit konstruktiv möglichst einfachen Mitteln eine möglichst effektive Möglichkeit zum Schutz von Weltrauminfrastruktur zu schaffen.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem ersten Aspekt wird eine Vorrichtung zum Entgegenwirken gegen ein Zielobjekt im Weltraum vorgeschlagen. Die Vorrichtung weist wenigstens einen Raumflugkörper auf, der dazu eingerichtet ist, sich basierend auf Zieldaten dem Zielobjekt anzunähern. Zudem weist die Vorrichtung einen Effektor auf. Der Effektor ist an einer Spitze des Raumflugkörpers anordbar oder angeordnet. Des Weiteren weist der Effektor eine Schutzstruktur auf, die in wenigstens eine von der Spitze abgewandte Richtung wirksam ist. Zudem weist der Effektor wenigstens eine an oder in der Schutzstruktur angeordnete Sprengladung auf.

Die vorgeschlagene Vorrichtung ermöglicht es mit konstruktiv einfachen Mitteln, einen effektiven Schutz für Weltrauminfrastruktur gegen eine Bedrohung zu schaffen, die durch das Zielobjekt gegeben sein kann. Die Vorrichtung kann so betrieben werden, dass mittels des Raumflugkörpers und/oder des Effektors das Zielobjekt zumindest teilweise oder vollständig funktionsunfähig oder anderweitig zumindest unschädlicher gemacht wird, so dass die durch das Zielobjekt bewirkte Bedrohung zumindest teilweise oder weitestgehend beseitigt wird. Durch die Schutzstruktur kann eine Beschädigung des Raumflugkörpers zumindest so weit vermieden werden, dass dieser auch nach Einsatz bzw. Zünden der wenigstens einen Sprengladung zumindest weitestgehend funktionsfähig bleibt. Ggf. kann der Raumflugkörper mehrfach dem Zielobjekt, oder ggf. mehreren Zielobjekten, angenähert werden, um mehrere Sprengladungen zu zünden. Die Anordnung des Effektors an der Spitze und/oder die Schutzstruktur kann eine Beschädigung, Fragmentation des Raumflugkörpers und/oder eine Fragmentierung des Zielobjekts zumindest weitestgehend vermeiden, so dass zumindest das Risiko verringert werden kann, durch das Entgegenwirken gegen das Zielobjekt zusätzlichen Weltraumschrott zu erzeugen

Wie hierin verwendet, kann unter dem Raumflugkörper jeder weltraumtaugliche Flugkörper verstanden werden, der dazu eingerichtet ist, sich dem Zielobjekt im Weltraum anzunähern. Der Raumflugkörper kann beispielsweise ein Raumfahrzeug, eine Raumsonde, ein künstlicher Satellit, eine Rakete, oder dergleichen sein. Der Raumflugkörper kann eine weltraumtaugliche Struktur aufweisen, die zum Tragen des Effektors geeignet ist. Zudem kann der Raumflugkörper in zumindest einigen Weiterbildungen wenigstens eines der folgenden Mittel aufweisen: einen bordeigenen Antrieb, eine bordeigene Energieversorgung, ein bordeigenes Steuersystem, das dazu eingerichtet ist, den Raumflugkörper zu steuern und/oder zu manövrieren, eine bordeigene Recheneinrichtung, wie etwa einen Computer, Prozessor, oder dergleichen, ein Lagekontrollsystem, z.B. Attitude Determination and Control System (ACS), ein Kommunikationssystem, ein System zur Führung, Navigation und Steuerung, z.B. Guidance Navigation and Control (GNC), und/oder wenigstens einen Suchkopf.

Der Raumflugkörper kann dazu eingerichtet sein, die Zieldaten zu empfangen, beispielsweise aus der Ferne, z.B. unter Nutzung eines Kommunikationssystems, von einem bordeigenen Datenspeicher, oder dergleichen. Die Zieldaten können basierend auf wenigstens einer Erfassungseinrichtung, wie etwa einem Sensor, einem Sensornetzwerk oder dergleichen, erzeugt werden und das Zielobjekt identifizierbar machen bzw. diesem zugeordnet sein. Die Zieldaten können basierend auf Beobachtungen aus dem Weltraum und/oder von der Erde aus erzeugt werden. Beispielsweise können die Zieldaten von einem oder unter Verwendung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystem, z.B. C2 (Command & Control) erzeugt und/oder bereitgestellt werden. Die Zieldaten können beispielsweise auch einen Treffpunkt, Abfangpunkt oder dergleichen des Raumflugkörpers mit dem Zielobjekt angeben, der beispielsweise basierend auf Daten der Erfassungseinrichtung, z.B. auch unter Einbeziehung astronomischen Wissens, berechnet werden kann. Die Vorrichtung kann dazu eingerichtet sein, basierend auf den Zieldaten hin zu dem Zielobjekt zu manövrieren, z.B. die Geschwindigkeit und/oder Lage des Raumflugkörpers und/oder des Effektors an das Zielobjekt anzupassen. Alternativ oder zusätzlich dazu, kann die Vorrichtung auch dazu eingerichtet sein, das Zielobjekt basierend auf bordeigenen Mitteln, beispielsweise basierend auf einem bordeigenen Suchkopf, anzunähern. Das Annähern des Raumflugkörpers und/oder des Effektors an das Zielobjekt kann auf dem gleichen oder einem ähnlichen, z.B. nahen oder benachbarten, Orbit, d.h. Umlaufbahn, der Erde erfolgen, auf der sich das Zielobjekt befindet.

Wie hierin verwendet, kann unter dem Effektor jede Einrichtung verstanden werden, die dazu eingerichtet ist, dem Zielobjekt entgegenzuwirken, z.B. nach Art einer Waffe. Das Entgegenwirken kann beispielsweise auch ein Abfangen, Abwehren oder dergleichen des Zielobjekts umfassen. Das Zielobjekt kann beispielsweise auch ein militärisch genutztes Objekt sein. Der Effektor kann jede Einrichtung sein, die dazu eingerichtet ist, das Zielobjekt so weit außer Funktion zu setzen, dass die Schädlichkeit des Zielobjekts für die zu schützende Weltrauminfrastruktur zumindest verringert oder das Zielobjekt zumindest im Wesentlichen unschädlich gemacht wird.

Gemäß einer Weiterbildung kann die Sprengladung als Hohlladung ausgeführt sein. Beispielsweise kann die Sprengladung einen brisanten Sprengstoff aufweisen. Ein Zünder kann an einer der Spitze abgewandten Seite der Sprengladung bzw. des Sprengstoffs angeordnet sein. Durch Zünden der Sprengladung kann sich ein Stachel bzw. eine Lanze bilden, die in das Zielobjekt eindringen oder dieses durchdringen kann. In zumindest einigen Ausführungsbeispielen kann die Sprengladung in einer Metalleinlage angeordnet sein. Die Metalleinlage kann kegelförmig oder halbkugelförmig ausgeführt sein.

In einer Weiterbildung kann die Schutzstruktur zylinderförmig, quaderförmig, kegelförmig, kegelmantelförmig, halbkugelförmig oder halbkugelmantelförmig ausgeführt sein. Die Schutzstruktur kann dazu dienen, die übrige Vorrichtung, insbesondere den Raumflugkörper, beim Zünden der Sprengladung vor Beschädigung zu schützen. Die Schutzstruktur kann beispielsweise aus einem geeigneten Werkstoff, wie etwa einem Metallwerkstoff oder dergleichen, ausgeführt sein.

Gemäß einer Weiterbildung kann der Raumflugkörper wenigstens einen Suchkopf aufweisen. Der Raumflugkörper kann dazu eingerichtet sein, sich mittels des Suchkopfes zielgeführt an das Zielobjekt anzunähern. Suchköpfe und deren Funktion sind im vorliegenden technischen Gebiet bekannt, so dass eine genauere Beschreibung des Suchkopfes entbehrlich ist. Prinzipiell kann ein solcher Suchkopf einen oder mehrere Sensoren aufweisen. Der wenigstens eine Suchkopf kann auch als Sucher bezeichnet werden. Mittels einer Steuereinrichtung können die Sensorinformationen in Steuerbefehle umgesetzt werden, mit denen die Flugrichtung des Raumflugkörpers beeinflusst werden kann. Der Suchkopf kann eine bordeigene Zielführung erlauben.

In einer Weiterbildung kann der wenigstens eine Suchkopf an dem Raumflugkörper gelagert sein und darüber gegenüber dem Raumflugkörper wahlweise verschwenkbar sein. Beispielsweise kann der wenigstens eine Suchkopf in eine Richtung quer zu einer Längsachse und/oder einer bestimmungsgemäßen Bewegungsrichtung des Raumflugkörpers verschwenkbar sein. In anderen Worten kann der wenigstens eine Suchkopf wahlweise einschwenkbar und/oder einklappbar, d.h. hin zu dem Raumflugkörper schwenkbar, und ausschwenkbar und/oder ausklappbar sein. Dadurch kann der wenigstens eine Suchkopf wahlweise zwischen einer verstauten Position und einer operativen Position bewegt werden. Weiter beispielsweise kann der wenigstens eine Suchkopf um eine Achse quer zu einer Längsachse und/oder einer bestimmungsgemäßen Bewegungsrichtung des Raumflugkörpers verschwenkbar sein. Dadurch kann der Suchkopf durch Verschwenken wahlweise in einer bestimmungsgemäßen Bewegungsrichtung des Raumflugkörpers oder dieser entgegen gerichtet angeordnet werden. Des Weiteren kann zum Schutz des wenigstens einen Suchkopfes dieser vor der Zündung der wenigstens einen Sprengladung eingeklappt werden. Als Folge der Zündung und der damit eingehenden Krafteinwirkung auf den Raumflugkörper kann dessen Bahn verändert werden. Sobald eine Steuervorrichtung der Vorrichtung und/oder des Raumflugkörpers, z.B. ein Lagekontrollsystem oder dergleichen, die Lage des Raumflugkörpers stabilisiert hat, kann der wenigstens eine Suchkopf erneut ausgeklappt werden und sich auf das Zielobjekt ausrichten. Auf diese Art kann der am Zielobjekt bewirkte Schaden bewertet werden. Es ist aber auch möglich, eine weitere Sprengladung vorzusehen, die dann gezündet werden kann.

Gemäß einer Weiterbildung kann der wenigstens eine Suchkopf als Stereosuchkopf mit zwei Suchköpfen ausgeführt sein. Beispielsweise kann der wenigstens eine Suchkopf eine Stereo IR Kamera, als optische Kamera oder dergleichen aufweisen. Weiter beispielsweise kann der wenigstens eine Suchkopf in eine Richtung quer zu einer Längsachse und/oder einer bestimmungsgemäßen Bewegungsrichtung, d.h. seitwärts, des Raumflugkörpers verschwenkbar sein. In anderen Worten kann der wenigstens eine Suchkopf wahlweise einschwenkbar und/oder einklappbar, d.h. hin zu dem Raumflugkörper schwenkbar, und ausschwenkbar und/oder ausklappbar sein.

In einer Weiterbildung kann der wenigstens eine Suchkopf gemeinsam mit dem Effektor gegenüber dem Raumflugkörper um eine Achse quer zu einer bestimmungsgemäßen Bewegungsrichtung des Raumflugkörpers verschwenkbar sein. Je nach Verschwenkung kann entweder der wenigstens eine Suchkopf oder der Effektor die Spitze des Raumflugkörpers ausbilden. In anderen Worten können der wenigstens eine Suchkopf und der Effektor um eine gemeinsame Achse verschwenkbar sein. Der wenigstens eine Suchkopf und der Effektor können einander abgewandt, d.h. um etwa 180° zueinander versetzt, angeordnet sein, wobei eine jeweilige Verschwenkung und/oder Drehung um die etwa 180° bewirkt, dass entweder der wenigstens eine Suchkopf oder der Effektor die Spitze des Raumflugkörpers ausbildet. In dieser Anordnung ist wahlweise der wenigstens eine Suchkopf oder die wenigstens eine Sprengladung in Bewegungsrichtung des Raumflugkörpers ausgerichtet. Der Wechsel von dem wenigstens einen Suchkopf auf die wenigstens eine Sprengladung kann beispielsweise kurz vor deren Einsatz erfolgen, wenn der wenigstens eine Suchkopf die gewünschte Distanz zum Zielobjekt gemessen hat.

Gemäß einer Weiterbildung kann die Vorrichtung ferner einen Zünder aufweisen. Der Zünder kann zum signalgesteuerten Zünden der wenigstens einen Sprengladung bei einem Abstand der Spitze zu dem Zielobjekt eingerichtet sein. Die wenigstens eine Sprengladung kann, ggf. durch eine Metalleinlage oder dergleichen, eine Art Lanze oder dergleichen ausbilden, mit der das Zielobjekt oder eine Außenhülle desselben beispielsweise zumindest teilweise durchstoßen werden kann.

Ein zweiter Aspekt bezieht sich auf die Verwendung einer Vorrichtung zum Entgegenwirken gegen ein Zielobjekt im Weltraum und/oder Unschädlichmachen eines Zielobjekts im Weltraum. Dabei wird ein Raumflugkörper, der einen Effektor aufweist, der an einer Spitze des Raumflugkörpers anordbar oder angeordnet ist, eine Schutzstruktur aufweist, die in wenigstens eine von der Spitze abgewandte Richtung wirksam ist und eine an oder in der Schutzstruktur angeordnete Sprengladung aufweist, basierend auf Zieldaten dem Zielobjekt angenähert.

Die Vorrichtung kann gemäß dem ersten Aspekt und dessen Weiterbildungen beliebig weitergebildet werden.

Gemäß einer Weiterbildung kann der Raumflugkörper von der Erde aus hin zu dem Zielobjekt gestartet und/oder verbracht werden. Hierzu kann eine Startvorrichtung und/oder eine Verbringungsvorrichtung vorgesehen sein, die zum Start und/oder Verbringen des Raumflugkörpers von Land, Wasser oder Luft eingerichtet sein kann. Damit kann der Raumflugkörper bei Bedarf, z.B. bei Bestimmung des Zielobjekts als potenzielle Bedrohung, von der Erde aus gestartet und/oder verbracht werden.

In einer Weiterbildung kann der Raumflugkörper als dedizierter Satellit im Weltraum vorgehalten und von dort aus dem Zielobjekt angenähert werden. Beispielsweise kann der Raumflugkörper und/oder der Effektor bereits in den Weltraum verbracht, bevor eine Bedrohung erkennbar ist bzw. ein konkreter Bedarf besteht. Dies kann mittels eines dedizierten Satelliten bewerkstelligt werden, der auch dazu eingerichtet sein kann, seine Bahn ggf. auch mehrfach zu wechseln oder mehrere Objekte auf einem Orbit zu schützen. Dies bildet eine Wachfunktion.

Gemäß einer Weiterbildung kann der Raumflugkörper von einem Satelliten getragen und von dort aus hin zu dem Zielobjekt gestartet werden. Beispielsweise können ein oder mehrere Raumflugkörper und/oder Effektoren an oder auf dem zu schützenden Satellit installiert sein. Dabei können der Satellit und der Raumflugkörper und/oder der Effektor gemeinsam gestartet bzw. in den Weltraum verbracht werden. Dies bildet ein Selbstverteidigungssystem für den Satellit, wobei das Prinzip auch auf andere Weltrauminfrastruktur anwendbar ist.

Ein dritter Aspekt stellt ein System zum Entgegenwirken gegen ein Zielobjekt im Weltraum zur Verfügung. Das System weist wenigstens eine Erfassungseinrichtung auf, die dazu eingerichtet ist, das Zielobjekt zum Erzeugen von Zieldaten zu erfassen. Zudem weist das System wenigstens einen Raumflugkörper auf, der dazu eingerichtet ist, sich basierend auf Zieldaten dem Zielobjekt anzunähern. Des Weiteren weist das System wenigstens einen Effektor, der von dem wenigstens einen Raumflugkörper tragbar oder getragen ist und dazu eingerichtet ist, von dem wenigstens einen Raumflugkörper aus das Zielobjekt einzufangen oder an das Zielobjekt anzukoppeln.

Die wenigstens eine Erfassungseinrichtung kann wenigstens einen Sensor, ein Sensornetzwerk oder dergleichen aufweisen, die im Weltraum und/oder der Erde angeordnet sein können. Die auf der wenigstens einen Erfassungseinrichtung basierenden Zieldaten können basierend auf Beobachtungen aus dem Weltraum und/oder von der Erde aus erzeugt werden. Beispielsweise können die Zieldaten von einem Weltraumüberwachungssystem oder unter Nutzung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystem, z.B. C2 (Command & Control) erzeugt und/oder bereitgestellt werden.

Das System kann gemäß dem ersten Aspekt und/oder dem zweiten Aspekt und deren jeweiligen Weiterbildungen weitergebildet werden.

Gemäß einer Weiterbildung kann das System ferner eine Startvorrichtung und/oder eine Verbringungsvorrichtung aufweisen. Die Startvorrichtung und/oder Verbringungsvorrichtung kann dazu eingerichtet sein, den Raumflugkörper von der Erde aus hin zu dem Zielobjekt zu starten.

Beispielsweise kann der wenigstens eine Raumflugkörper in der Verbringungsvorrichtung durch die Startvorrichtung integriert werden. Die Startvorrichtung kann eine mechanische und/oder elektrische Schnittstelle und/oder eine Datenschnittstelle zwischen der Verbringungsvorrichtung und dem Raumflugkörper ausbilden. Optional kann vorgesehen sein, dass vor dem Start der Raumflugkörper von der Verbringungsvorrichtung, mit Energie versorgt wird. Die Startvorrichtung kann dazu ausgelegt sein, dass ein Suchkopf des Raumflugkörpers ein Sichtfeld aus der Startvorrichtung heraus hat. Dadurch kann der Suchkopf seine Daten, z.B. Bilddaten usw., an z.B. das C2 System zurückmelden, um Bedrohungen in Suchkopfreichweite zu erkennen und zu identifizieren. Es ist auch möglich, den Suchkopf bereits vor dem Start auf das Ziel aufzuschalten (Lock-on-before-launch). Die mechanische Schnittstelle kann den Raumflugkörper während der Verbringung bis zum Start arretieren. Beim Start kann die Arretierung, z.B. signalgesteuert, gelöst werden. Der Raumflugkörper kann dann mittels seines Antriebs aus der Startvorrichtung heraus beschleunigt werden.

In einer Weiterbildung kann das System ferner einen Satellit aufweisen. Der Satellit kann dazu eingerichtet sein, den Raumflugkörper zu tragen, wobei der Raumflugkörper von dem Satellit aus hin zu dem Zielobjekt startbar ist. Hierbei kann der Raumflugkörper und/oder der Effektor als Selbstverteidigungssystem für den Satellit dienen. Der Raumflugkörper und/oder der Effektor kann dort warten, bis das Zielobjekt in Reichweite ist und kann dann von dem Satellit aus gestartet werden.

Die oben beschriebenen Aspekte, Ausgestaltungen, Varianten und Beispiele können miteinander kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: schematisch eine exemplarische Vorrichtung mit Raumflugkörper und Effektor gemäß einem Ausführungsbeispiel.
- Fig. 2: schematisch eine exemplarische Vorrichtung mit Raumflugkörper und Effektor gemäß einem Ausführungsbeispiel.
- Fig. 3: schematisch eine exemplarische Vorrichtung mit Raumflugkörper und Effektor gemäß einem Ausführungsbeispiel.
- Fig. 4: schematisch eine exemplarische Vorrichtung mit Raumflugkörper und Effektor gemäß einem Ausführungsbeispiel.
- Fig. 5: schematisch eine exemplarische Vorrichtung mit Raumflugkörper und Effektor gemäß einem Ausführungsbeispiel.
- Fig. 6: schematisch eine exemplarische Vorrichtung mit Raumflugkörper und Effektor gemäß einem Ausführungsbeispiel.
- Fig. 7: schematisch ein exemplarisches System mit Raumflugkörper und Effektor gemäß einem Ausführungsbeispiel.
- Fig. 8: in einem Flussdiagramm mögliche Aktivitäten bezogen auf eine Vorrichtung und/oder einen Raumflugkörper in einer Startvorrichtung, gemäß einem Ausführungsbeispiel.
- Fig. 9: in einem Flussdiagramm einen möglichen Ablauf bei Verwendung eines Systems mit Raumflugkörper und Effektor gemäß einem Ausführungsbeispiel.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

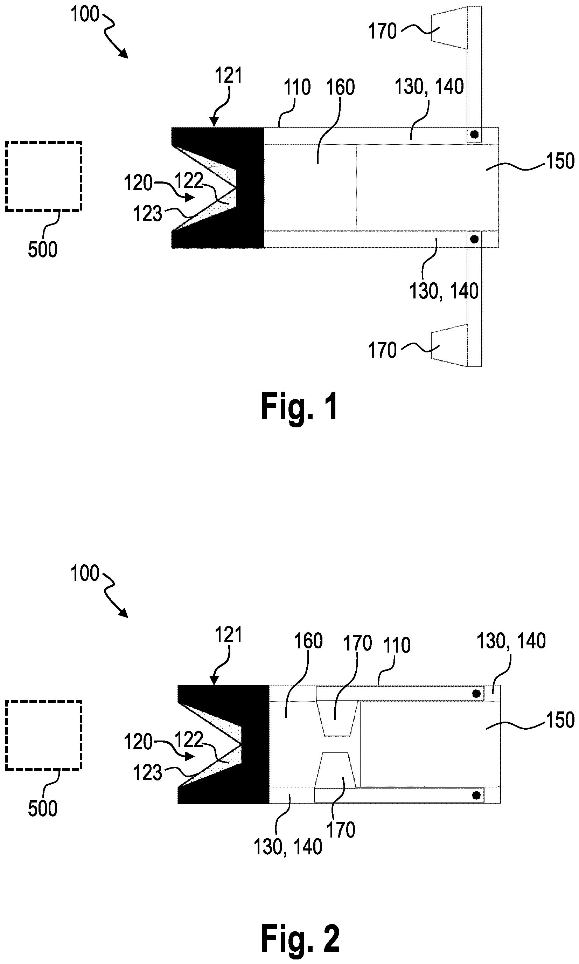

Fig. 1 zeigt in einer schematischen Draufsicht eine exemplarische Vorrichtung 100, die dazu eingerichtet ist, einem Zielobjekt 500 im Weltraum entgegenzuwirken.

Die Vorrichtung 100 weist wenigstens einen Raumflugkörper 110 auf. Der Raumflugkörper 110 ist dazu eingerichtet, sich basierend auf Zieldaten dem Zielobjekt 500 anzunähern. Zudem weist die Vorrichtung einen Effektor 120 auf. Der Effektor 120 ist an einer Spitze des Raumflugkörpers 110 anordbar oder angeordnet. Des Weiteren weist der Effektor 120 eine Schutzstruktur 121 auf, die in wenigstens eine von der Spitze abgewandte Richtung wirksam ist. Zudem weist der Effektor 120 wenigstens eine an oder in der Schutzstruktur 121 angeordnete Sprengladung 122 auf.

In zumindest einigen Ausführungsbeispielen kann die wenigstens eine Sprengladung 122 als Hohlladung ausgeführt sein. Beispielsweise kann die Sprengladung 122 einen brisanten Sprengstoff aufweisen. Ein (nicht gezeigter) Zünder kann an einer der Spitze abgewandten Seite der wenigstens einen Sprengladung 122 bzw. des Sprengstoffs angeordnet sein. Durch Zünden der wenigstens einen Sprengladung 122 kann sich ein Stachel bzw. eine Lanze bilden, die in das Zielobjekt 500 eindringen oder dieses durchdringen kann. In zumindest einigen Ausführungsbeispielen kann die wenigstens eine Sprengladung 122 in einer Metalleinlage 123 angeordnet sein. Die Metalleinlage 123 kann beispielsweise kegelförmig oder halbkugelförmig ausgeführt sein.

Des Weiteren kann in zumindest einigen Ausführungsbeispielen die Schutzstruktur 121 kegelförmig, kegelmantelförmig, halbkugelförmig oder halbkugelmantelförmig ausgeführt sein. Die Schutzstruktur 121 kann dazu dienen, die übrige Vorrichtung 100, insbesondere den Raumflugkörper 110, beim Zünden der wenigstens einen Sprengladung 122 vor Beschädigung zu schützen. Die Schutzstruktur 121 kann beispielsweise aus einem geeigneten Werkstoff, wie etwa einem Metallwerkstoff oder dergleichen, als Panzerung, oder dergleichen ausgeführt sein.

In zumindest einigen Ausführungsbeispielen kann der Raumflugkörper 110 beispielsweise ein Raumfahrzeug, eine Raumsonde, ein künstlicher Satellit, eine Rakete, oder dergleichen sein. Der Raumflugkörper 110 kann eine weltraumtaugliche Struktur 130 aufweisen, die u.a. auch zum Tragen des Effektors 120 geeignet ist. Zudem kann der Raumflugkörper 110, z.B. die Struktur 130, ein Lagekontrollsystem 140, z.B. ein Attitude Determination and Control System (ACS), aufweisen, das zur Steuerung der Orientierung, Lage oder dergleichen des Raumflugkörpers 110 in Bezug auf einen Bezugsrahmen oder eine andere Entität wie beispielsweise die Himmelskugel, bestimmte Felder, nahe gelegene Objekte usw. eingerichtet ist. Es kann z.B. wenigstens einen Sensor, wenigstens einen Aktuator zum Aufbringen eines Moments zum Erreichen einer bestimmten Höhe, eine elektronische Steuerung oder dergleichen aufweisen. Des Weiteren kann der Raumflugkörper 110 in zumindest einigen Ausführungsbeispielen einen bordeigenen Antrieb 150, z.B. wenigstens ein Triebwerk oder dergleichen, und wenigstens eines der folgenden Mittel 160 aufweisen: eine bordeigene Energieversorgung, z.B. Photovoltaik, eine Batterie oder dergleichen, ein bordeigenes Steuersystem, z.B. mit wenigstens einem Zusatztriebwerk oder dergleichen, das dazu eingerichtet ist, den Raumflugkörper 110 zu steuern und/oder zu manövrieren, eine bordeigene Recheneinrichtung, wie etwa einen Computer, Prozessor, oder dergleichen, ein Kommunikationssystem, ein System zur Führung, Navigation und Steuerung, z.B. ein Guidance Navigation and Control (GNC) System. Des Weiteren kann der Raumflugkörper 110 in zumindest einigen Ausführungsbeispielen wenigstens einen Suchkopf 170 (engl. Seeker) aufweisen.

Es sei angemerkt, dass die Anordnung und/oder die Ausgestaltung der Komponenten der Vorrichtung 100 bzw. des Raumflugkörpers 110, d.h. des Effektors 120, der Struktur 130, des Lagekontrollsystems 140, z.B. Attitude Determination and Control System (ACS), des wenigstens einen Triebwerks 150 und des Suchkopfes 170, gemäß Fig. 1 lediglich exemplarisch ist und auch andere Anordnungen und/oder Ausgestaltungen möglich sind. Beispielsweise kann die jeweilige Anordnung und/oder Ausgestaltung auftrags- oder missionsabhängig gewählt werden. Zudem kann die jeweilige Anordnung und/oder Ausgestaltung in Abhängigkeit des Effektors 120, z.B. seines Typs, seiner Ausgestaltung, usw., gewählt werden.

Wie oben erwähnt, kann der Raumflugkörper in zumindest einigen Ausführungsbeispielen den wenigstens einen Suchkopf 170 aufweisen. Die Vorrichtung 100 und/oder der Raumflugkörper kann dazu eingerichtet sein, sich mittels des wenigstens einen Suchkopfes 170 zielgeführt dem Zielobjekt 500 anzunähern. Beispielsweise kann der wenigstens eine Suchkopf 170 an dem Raumflugkörper 110 gelagert sein und darüber, d.h. über die Lagerung, gegenüber dem Raumflugkörper 110 wahlweise verschwenkbar sein. Beispielsweise kann der wenigstens eine Suchkopf 170 in eine Richtung quer zu einer Längsachse und/oder einer bestimmungsgemäßen Bewegungsrichtung des Raumflugkörpers 110 verschwenkbar sein. In anderen Worten kann der wenigstens eine Suchkopf 170 wahlweise einschwenkbar und/oder einklappbar, d.h. hin zu dem Raumflugkörper 110 schwenkbar, und ausschwenkbar und/oder ausklappbar sein. Dadurch kann der wenigstens eine Suchkopf 170 wahlweise zwischen einer verstauten Position und einer operativen Position bewegt werden. Des Weiteren kann zum Schutz des wenigstens einen Suchkopfes 170 dieser vor der Zündung der wenigstens einen Sprengladung 122 eingeklappt werden. Als Folge der Zündung und der damit eingehenden Krafteinwirkung auf den Raumflugkörper 110 kann dessen Bahn verändert werden. Sobald z.B. eine Steuervorrichtung oder dergleichen der Vorrichtung 100 und/oder des Raumflugkörpers 110, z.B. ein Lagekontrollsystem oder dergleichen, die Lage des Raumflugkörpers 110 stabilisiert hat, kann der wenigstens eine Suchkopf 170 erneut ausgeklappt werden und sich auf das Zielobjekt 500 ausrichten. Auf diese Art kann der am Zielobjekt 500 bewirkte Schaden bewertet werden. Es ist aber auch möglich, eine weitere Sprengladung 122 vorzusehen, die dann ggf. gezündet werden kann.

In zumindest einigen Ausführungsbeispielen kann der wenigstens eine Suchkopf 170 als Stereosuchkopf mit zwei Suchköpfen ausgeführt sein. Beispielsweise kann der wenigstens eine Suchkopf 170 eine Stereo IR Kamera, als optische Kamera oder dergleichen aufweisen. Weiter beispielsweise kann der wenigstens eine Suchkopf 170 in eine Richtung quer zu einer Längsachse und/oder einer bestimmungsgemäßen Bewegungsrichtung, d.h. seitwärts, des Raumflugkörpers verschwenkbar sein. In anderen Worten kann der wenigstens eine Suchkopf wahlweise einschwenkbar und/oder einklappbar, d.h. hin zu dem Raumflugkörper schwenkbar, und ausschwenkbar und/oder ausklappbar sein.

In Fig. 1 ist der wenigstens eine Suchkopf 170 in eine operative Position, hier seitlich, ausgeklappt.

Fig. 2 zeigt die Vorrichtung 100 erneut in einer schematischen Draufsicht. Abweichend von Fig. 1, ist der wenigstens eine Suchkopf 170 hier in eine Verstauposition und/oder Schutzposition eingeklappt.

Wie oben erwähnt, kann der wenigstens eine Suchkopf 170 wahlweise zwischen einer verstauten Position und einer operativen Position bewegt werden. Des Weiteren kann zum Schutz des wenigstens einen Suchkopfes 170 dieser vor der Zündung der wenigstens einen Sprengladung 122 eingeklappt werden. Als Folge der Zündung und der damit eingehenden Krafteinwirkung auf den Raumflugkörper 110 kann dessen Bahn verändert werden. Sobald z.B. eine Steuervorrichtung oder dergleichen der Vorrichtung 100 und/oder des Raumflugkörpers 110, z.B. ein Lagekontrollsystem oder dergleichen, die Lage des Raumflugkörpers 110 stabilisiert hat, kann der wenigstens eine Suchkopf 170 erneut ausgeklappt werden und sich auf das Zielobjekt 500 ausrichten. Auf diese Art kann der am Zielobjekt 500 bewirkte Schaden bewertet werden. Es ist aber auch möglich, eine weitere Sprengladung 122 vorzusehen, die dann ggf. gezündet werden kann.

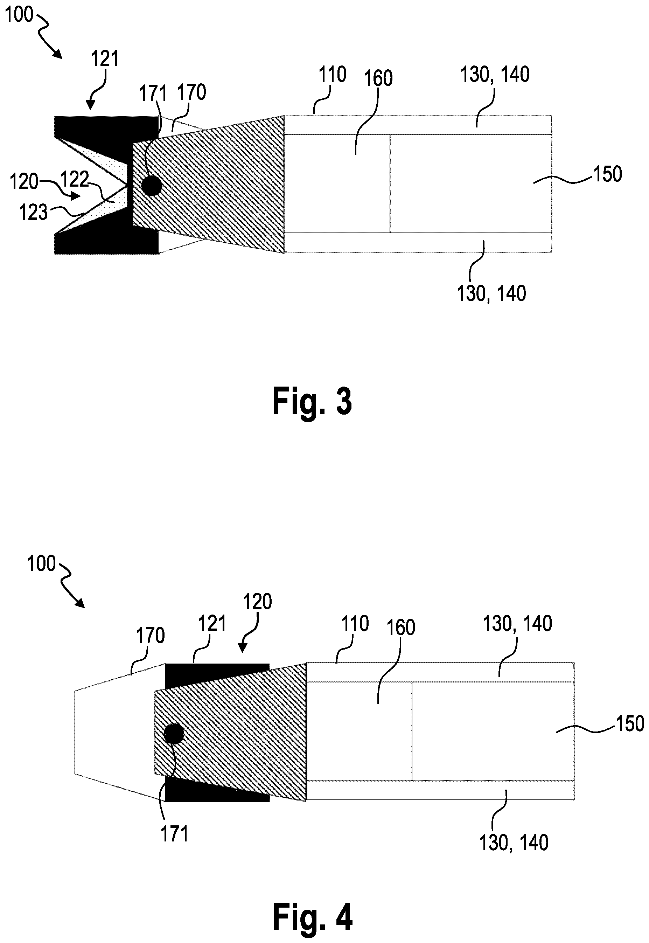

Fig. 3 und Fig. 4 zeigen in einer schematischen Draufsicht eine weitere exemplarische Ausgestaltung der Vorrichtung 100.

Demgemäß kann der wenigstens eine Suchkopf 170 um eine Achse 171 quer zu einer Längsachse und/oder einer bestimmungsgemäßen Bewegungsrichtung des Raumflugkörpers 110 verschwenkbar sein. Dadurch kann der wenigstens eine Suchkopf 170 durch Verschwenken wahlweise in einer bestimmungsgemäßen Bewegungsrichtung des Raumflugkörpers 110 oder dieser entgegen gerichtet angeordnet werden.

Zudem kann der wenigstens eine Suchkopf 170 gemeinsam mit dem Effektor 120 gegenüber dem Raumflugkörper 110 um die Achse 171, d.h. quer zu einer bestimmungsgemäßen Bewegungsrichtung des Raumflugkörpers 110, verschwenkbar sein. Je nach Verschwenkung kann entweder der wenigstens eine Suchkopf 170 oder der Effektor 120 die Spitze des Raumflugkörpers 110 ausbilden. In anderen Worten können der wenigstens eine Suchkopf 170 und der Effektor 120 um die gemeinsame Achse 171 verschwenkbar sein. Der wenigstens eine Suchkopf 170 und der Effektor 120 können einander abgewandt, d.h. um etwa 180° zueinander versetzt, angeordnet sein, wobei eine jeweilige Verschwenkung und/oder Drehung um die etwa 180° bewirkt, dass entweder der wenigstens eine Suchkopf 170 oder der Effektor 120 die Spitze des Raumflugkörpers 110 ausbildet. In dieser Anordnung ist wahlweise der wenigstens eine Suchkopf 170 oder die wenigstens eine Sprengladung 122 in Bewegungsrichtung des Raumflugkörpers 110 ausgerichtet. Der Wechsel von dem wenigstens einen Suchkopf 170 auf die wenigstens eine Sprengladung 122 kann beispielsweise kurz vor deren Einsatz erfolgen, wenn mittels des wenigstens eine Suchkopfes 170 die gewünschte Distanz zu dem Zielobjekt 500 gemessen wurde.

In Fig. 3 ist der wenigstens eine Suchkopf 170 entgegen der bestimmungsgemäßen Bewegungsrichtung des Raumflugkörpers 110 ausgerichtet bzw. angeordnet. Dementsprechend ist in Fig. 3 der Effektor 120 in bestimmungsgemäßen Bewegungsrichtung des Raumflugkörpers 110 ausgerichtet bzw. angeordnet. In Fig. 4 ist der wenigstens eine Suchkopf 170 in der bestimmungsgemäßen Bewegungsrichtung des Raumflugkörpers 110 ausgerichtet bzw. angeordnet. Dementsprechend ist in Fig. 4 der Effektor 120 entgegen der bestimmungsgemäßen Bewegungsrichtung des Raumflugkörpers 110 ausgerichtet bzw. angeordnet.

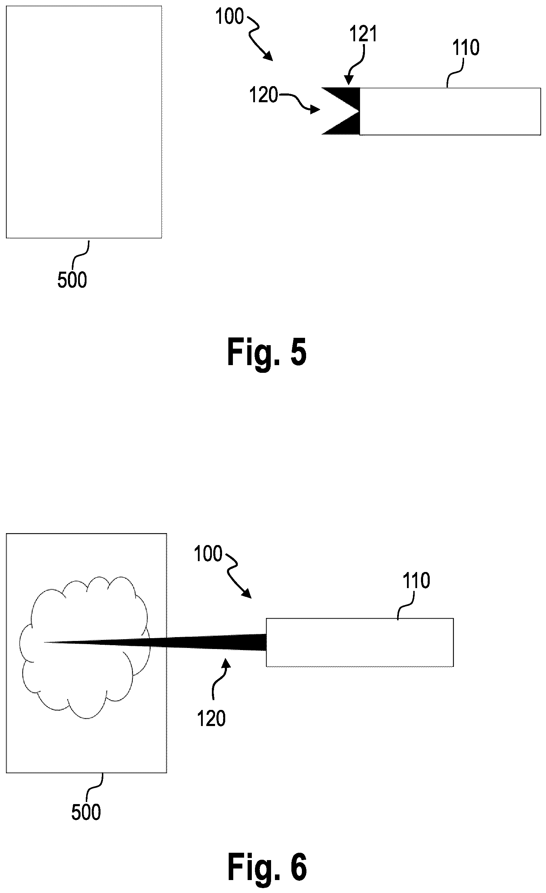

Fig. 5 und Fig. 6 zeigen die Vorrichtung 100 in einer exemplarischen Verwendung bzw. in einem möglichen bestimmungsgemäßen Einsatz.

In Fig. 5 nähert sich die Vorrichtung 100 bzw. der Raumflugkörper 110 und Effektor 120 dem Zielobjekt 500. In Fig. 6 ist oder wird die wenigstens eine Sprengladung 122 gezündet, wodurch eine Art. Lanze gebildet werden kann, die das Zielobjekt 500 beschädigen kann.

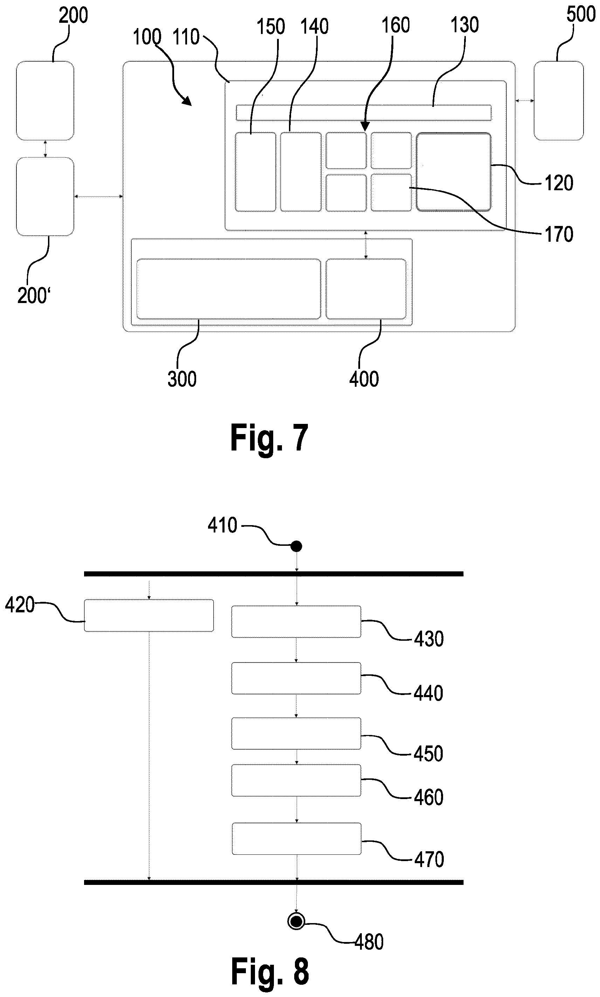

Fig. 7 zeigt in einem Blockdiagramm ein exemplarisches System 10 zum Entgegenwirken gegen ein Zielobjekt 500 im Weltraum.

Das System 10 weist die Vorrichtung 100 auf, die gemäß einem oder mehreren der hierin beschriebenen Ausführungsbeispielen ausgebildet sein kann. Dementsprechend kann der Effektor 120 gemäß einem oder mehreren der hierin beschriebenen Ausführungsbeispiele ausgeführt sein.

Das System 10 weist zudem wenigstens eine Erfassungseinrichtung 200, 200' auf, die dazu eingerichtet ist, das Zielobjekt zum Erzeugen von Zieldaten zu erfassen. Die wenigstens eine Erfassungseinrichtung 200, wie etwa ein Sensor, ein Sensornetzwerk oder dergleichen, kann dazu eingerichtet sein, die Zieldaten basierend auf Beobachtungen aus dem Weltraum und/oder von der Erde aus zu erzeugen. Beispielsweise können die Zieldaten von einem oder unter Verwendung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystem, z.B. C2 (Command & Control) erzeugt und/oder bereitgestellt werden. Die Zieldaten können beispielsweise auch einen Treffpunkt, Abfangpunkt oder dergleichen des Raumflugkörpers mit dem Zielobjekt 500 angeben, der beispielsweise basierend auf Daten der Erfassungseinrichtung, z.B. auch unter Einbeziehung astronomischen Wissens, berechnet werden kann.

In zumindest einigen Ausführungsbeispielen kann das System 10 ferner eine Verbringungsvorrichtung 300 zum Verbringen der Vorrichtung 100 aufweisen.

Zudem kann das System eine Startvorrichtung 400 zum Starten des Raumflugkörpers 110 aufweisen. Die Startvorrichtung 400 und/oder die Verbringungsvorrichtung 300 kann dazu eingerichtet sein, die Vorrichtung 100 und/oder den Raumflugkörper 110 von der Erde aus hin zu dem Zielobjekt 500 zu starten.

Beispielsweise kann der wenigstens eine Raumflugkörper 110 in der Verbringungsvorrichtung 300 durch die Startvorrichtung 400 integriert werden. Die Startvorrichtung 400 kann eine mechanische und/oder elektrische Schnittstelle und/oder eine Datenschnittstelle zwischen der Verbringungsvorrichtung und dem Raumflugkörper 110 ausbilden. Optional kann vorgesehen sein, dass vor dem Start der Raumflugkörper 110 von der Verbringungsvorrichtung 300, mit Energie versorgt wird. Die Startvorrichtung 400 kann dazu ausgelegt sein, dass der Suchkopf 170 des Raumflugkörpers 110 ein Sichtfeld aus der Startvorrichtung 400 heraus hat. Dadurch kann der Suchkopf 170 seine Daten, z.B. Bilddaten usw., an z.B. das C2 System zurückmelden, um Bedrohungen in Suchkopfreichweite zu erkennen und zu identifizieren. Es ist auch möglich, den Suchkopf 170 bereits vor dem Start auf das Ziel aufzuschalten (Lock-on-before-launch). Die mechanische Schnittstelle kann den Raumflugkörper 110 während der Verbringung bis zum Start arretieren. Beim Start kann die Arretierung, z.B. signalgesteuert, gelöst werden. Der Raumflugkörper 110 kann dann mittels seines Antriebs 150 aus der Startvorrichtung 400 heraus beschleunigt werden.

Weiter beispielweise kann das System 10 ferner einen Satellit aufweisen. Der Satellit kann dazu eingerichtet sein, den Raumflugkörper 110 zu tragen, wobei der Raumflugkörper 110 von dem Satellit aus hin zu dem Zielobjekt 500 startbar ist. Hierbei kann der Raumflugkörper 110 und/oder der Effektor 120 als Selbstverteidigungssystem für den Satellit dienen. Der Raumflugkörper 110 und/oder der Effektor 120 kann dort warten, bis das Zielobjekt 500 in Reichweite ist und kann dann von dem Satellit aus gestartet werden.

Fig. 8 illustriert in einem Flussdiagramm mögliche Aktivitäten bezogen auf die Vorrichtung 100 und/oder den Raumflugkörper 110 in der Startvorrichtung 400.

Beginnend bei Block 410 befindet sich die Vorrichtung 100 und/oder der Raumflugkörper 110 in der Startvorrichtung 400. Block 420 gibt an, dass währenddessen der wenigstens eine Suchkopf 170 entsprechende Daten, z.B. auch Bilddaten, liefert, z.B. an das C2-System. Bei Block 430 gibt ein Bediener, z.B. ein Bediener des C2-Systems, einen Bekämpfungsbefehl. Gemäß Block 440 kann die bordeigene Energieversorgung des Raumflugkörpers 110 aktiviert werden. Bei Block 450 kann eine Arretierung für den Raumflugkörper 110 in der Startvorrichtung 400 deaktiviert, z.B. gelöst, werden. Gemäß Block 460 wird der Raumflugkörper 110 mittels seines Antriebs 150 beschleunigt. Bei Block 470 etabliert der Raumflugkörper 110 seine Kommunikation. Bei Block 480 befindet sich der Raumflugkörper 110 außerhalb der Startvorrichtung 100.

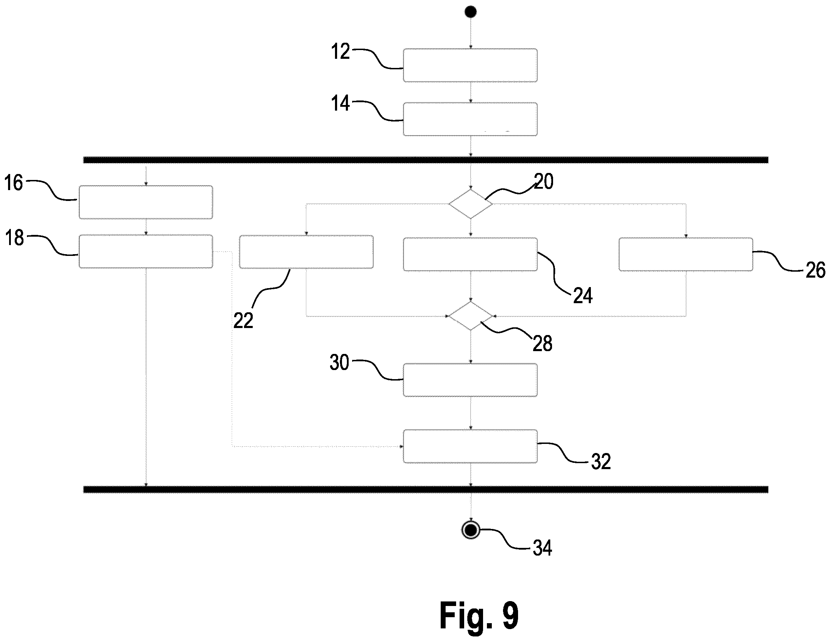

Fig. 9 illustriert in einem Flussdiagramm einen möglichen Ablauf bei Verwendung des Systems 10.

Beginnend bei Block 12 wird mittels der wenigstens einen Erfassungsvorrichtung 200, z.B. einem Space Situational Awareness (SSA)-Systems und/oder unter einem Führungs- und Kontrollsystem, z.B. C2 (Command & Control), eine mögliche Bedrohung durch das Zielobjekt 500 erkannt. Bei Block 14 gibt ein Bediener, z.B. ein Bediener des C2-Systems, einen Bekämpfungsbefehl. Gemäß Block 16 kann die wenigstens eine Erfassungsvorrichtung 200, 200' und/oder der wenigstens eine Suchkopf 170 das Zielobjekt 500 verfolgen. Gemäß Block 18 können Zielupdates erzeugt und/oder erhalten werden.

Block 20 deutet an, dass es verschiedene Anwendungs- und/oder Einsatzszenarien für die Vorrichtung 100 geben kann, wobei die Blöcke 22, 24 und 26 drei verschiedene Anwendungs- und/oder Einsatzszenarien angeben. Gemäß Block 22 kann der Raumflugkörper 110 von der Erde aus hin zu dem Zielobjekt 500 gestartet und/oder verbracht werden. Hierzu kann die Startvorrichtung 400 und/oder Verbringungsvorrichtung 300 vorgesehen sein, die zum Start und/oder Verbringen des Raumflugkörpers von Land, Wasser oder Luft eingerichtet sein kann. Damit kann der Raumflugkörper 110 bei Bedarf, z.B. bei Bestimmung des Zielobjekts als potenzielle Bedrohung, von der Erde aus gestartet und/oder verbracht werden. Gemäß Block 24 kann der Raumflugkörper 110 von einem Satelliten getragen und von dort aus hin zu dem Zielobjekt 500 gestartet werden. Beispielsweise können ein oder mehrere Raumflugkörper 110 und/oder Effektoren 120 an oder auf dem zu schützenden Satelliten installiert sein. Dabei können der Satellit und der Raumflugkörper 110 und/oder der Effektor 120 gemeinsam gestartet bzw. in den Weltraum verbracht werden. Dies bildet ein Selbstverteidigungssystem für den Satellit, wobei das Prinzip auch auf andere Weltrauminfrastruktur anwendbar ist. Gemäß Block 26 kann der Raumflugkörper 110 als dedizierter Satellit im Weltraum vorgehalten und von dort aus dem Zielobjekt 500 angenähert werden. Beispielsweise kann der Raumflugkörper 110 und/oder der Effektor 120 bereits in den Weltraum verbracht, bevor eine Bedrohung erkennbar ist bzw. ein konkreter Bedarf besteht. Dies kann mittels eines dedizierten Satelliten bewerkstelligt werden, der auch dazu eingerichtet sein kann, seine Bahn ggf. auch mehrfach zu wechseln oder mehrere Objekte auf einem Orbit zu schützen. Dies bildet eine Wachfunktion.

Bei Block 28 befindet sich das Zielobjekt 500 in Reichweite der Vorrichtung 100 und/oder des Raumflugkörpers 110. Bei Block 30 wird der Raumflugkörper 110 gestartet. Bei Block 32 nähert sich der Raumflugkörper 110 dem Zielobjekt 500 an, insbesondere auf Basis der Zieldaten. Bei Block 34 befindet sich der Raumflugkörper 110 in Reichweite zu dem Zielobjekt 500, um den Effektor 120 einzusetzen.

Die oben beschriebenen Aspekte, Ausgestaltungen, Varianten und Beispiele können miteinander kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

### BEZUGSZEICHENLISTE

- 10: System
- 12-34: Block von Flussdiagramm
- 100: Vorrichtung
- 110: Raumflugkörper
- 120: Effektor
- 121: Schutzstruktur
- 122: Sprengladung
- 123: Metalleinlage
- 130: Struktur
- 140: Lagekontrollsystem, z.B. Attitude Determination and Control System (ACS)
- 150: Antrieb
- 160: Mittel
- 170: Suchkopf
- 200: Erfassungseinrichtung
- 200': Erfassungseinrichtung
- 300: Verbringungsvorrichtung
- 400: Startvorrichtung
- 410-480: Block von Flussdiagramm
- 500: Zielobjekt

## Patentansprüche

1. Vorrichtung (100) zum Entgegenwirken gegen ein Zielobjekt (500) im Weltraum, aufweisend wenigstens einen Raumflugkörper (110), der dazu eingerichtet ist, sich basierend auf Zieldaten dem Zielobjekt (500) anzunähern, und einen Effektor (120), der an einer Spitze des Raumflugkörpers (110) anordbar oder angeordnet ist, eine Schutzstruktur (121) aufweist, die in wenigstens eine von der Spitze abgewandte Richtung wirksam ist und wenigstens eine an oder in der Schutzstruktur (121) angeordnete Sprengladung (122) aufweist.

2. Vorrichtung nach Anspruch 1, wobei die wenigstens eine Sprengladung (122) als Hohlladung ausgeführt ist.

3. Vorrichtung nach Anspruch 1 oder 2, wobei die Schutzstruktur (121) zylinderförmig, quaderförmig, kegelförmig oder halbkugelförmig ausgeführt ist.

4. Vorrichtung nach einem der vorhergehenden Ansprüche, wobei der Raumflugkörper (110) wenigstens einen Suchkopf (170) aufweist und dazu eingerichtet ist, sich mittels des Suchkopfes (170) zielgeführt an das Zielobjekt (500) anzunähern.

5. Vorrichtung nach Anspruch 4, wobei der wenigstens eine Suchkopf (170) an dem Raumflugkörper (110) gelagert und darüber gegenüber dem Raumflugkörper (110) wahlweise verschwenkbar ist.

6. Vorrichtung nach Anspruch 4 oder 5, wobei der wenigstens eine Suchkopf (170) als Stereosuchkopf mit zwei Suchköpfen ausgeführt ist.

7. Vorrichtung nach einem der Ansprüche 4 bis 6, wobei der wenigstens eine Suchkopf (170) gemeinsam mit dem Effektor (120) gegenüber dem Raumflugkörper (110) um eine Achse quer zu einer bestimmungsgemäßen Bewegungsrichtung des Raumflugkörpers (110) verschwenkbar ist und je nach Verschwenkung entweder der wenigstens eine Suchkopf (170) oder der Effektor (170) die Spitze des Raumflugkörpers ausbildet.

8. Vorrichtung nach einem der vorhergehenden Ansprüche, ferner aufweisend einen Zünder, der zum signalgesteuerten Zünden der Sprengladung bei einem Abstand der Spitze zu dem Zielobjekt (500) eingerichtet ist.

9. Verwendung einer Vorrichtung (100) zum Entgegenwirken gegen ein Zielobjekt (500) im Weltraum und/oder Unschädlichmachen eines Zielobjekts (500) im Weltraum, wobei ein Raumflugkörper (110), der einen Effektor (120) aufweist, der an einer Spitze des Raumflugkörpers (110) anordbar oder angeordnet ist, eine Schutzstruktur aufweist, die in wenigstens eine von der Spitze abgewandte Richtung wirksam ist und eine an oder in der Schutzstruktur angeordnete Sprengladung aufweist, basierend auf Zieldaten dem Zielobjekt (500) angenähert wird.

10. Verwendung nach Anspruch 9, wobei der Raumflugkörper (110) von der Erde aus hin zu dem Zielobjekt (500) gestartet und/oder verbracht wird.

11. Verwendung nach Anspruch 9, wobei der Raumflugkörper (110) als dedizierter Satellit im Weltraum vorgehalten und von dort aus dem Zielobjekt (500) angenähert wird.

12. Verwendung nach Anspruch 9, wobei der Raumflugkörper (110) von einem Satelliten getragen und von dort aus hin zu dem Zielobjekt (500) gestartet wird.

13. System (10) zum Entgegenwirken gegen ein Zielobjekt (500) im Weltraum, aufweisend:
wenigstens eine Erfassungseinrichtung (200, 200'), die dazu eingerichtet ist, das Zielobjekt (500) zum Erzeugen von Zieldaten zu erfassen,
wenigstens einen Raumflugkörper (110), der dazu eingerichtet ist, sich basierend auf Zieldaten dem Zielobjekt (500) anzunähern,
einen Effektor (120), der an einer Spitze des Raumflugkörpers (110) anordbar oder angeordnet ist, eine Schutzstruktur (121) aufweist, die in wenigstens eine von der Spitze abgewandte Richtung wirksam ist und eine an oder in der Schutzstruktur (121) angeordnete Sprengladung (122) aufweist.
